# EUROPÄISCHE PATENTSCHRIFT

(11) **EP 2 522 297 B1**
(45) Veröffentlichungstag und Bekanntmachung des Hinweises auf die Patenterteilung: **10.04.2019**
(21) Anmeldenummer: 12155720.1
(22) Anmeldetag: 16.02.2012
(51) Int. Cl.: A61C 1/18

(54) **Zahnärztliches Handinstrument mit länglicher Griffhülse**
Handheld dental instrument with elongated grip sleeve
Instrument manuel dentaire doté d'une poignée longitudinale

(30) Priorität: 11.05.2011 DE 102011075670
(43) Veröffentlichungstag der Anmeldung: 14.11.2012
(73) Patentinhaber: Kaltenbach & Voigt GmbH, 88400 Biberach (DE)
(72) Erfinder: Kuhn, Bernhard, 88400 Biberach (DE); Claßen, Thomas, 88518 Herbertingen (DE)
(74) Vertreter: Thun, Clemens

(56) Entgegenhaltungen:
- JP-A- 5 207 914
- US-A- 5 616 029
- US-A1- 2003 207 233
- US-A1- 2010 196 845

## Beschreibung

Die vorliegende Erfindung betrifft ein zahnärztliches Handinstrument gemäß dem Oberbegriff des Anspruchs 1, welches eine längliche Griffhülse aufweist, an deren vorderem Ende Mittel zum Haltern eines Behandlungswerkzeugs, beispielsweise eines zahnärztlichen Bohrers angeordnet sind. Innerhalb der Griffhülse sind Mittel zum Antreiben des Behandlungswerkzeugs angeordnet, welche zumindest zwei miteinander gekoppelte, drehbar gelagerte Wellen aufweisen.

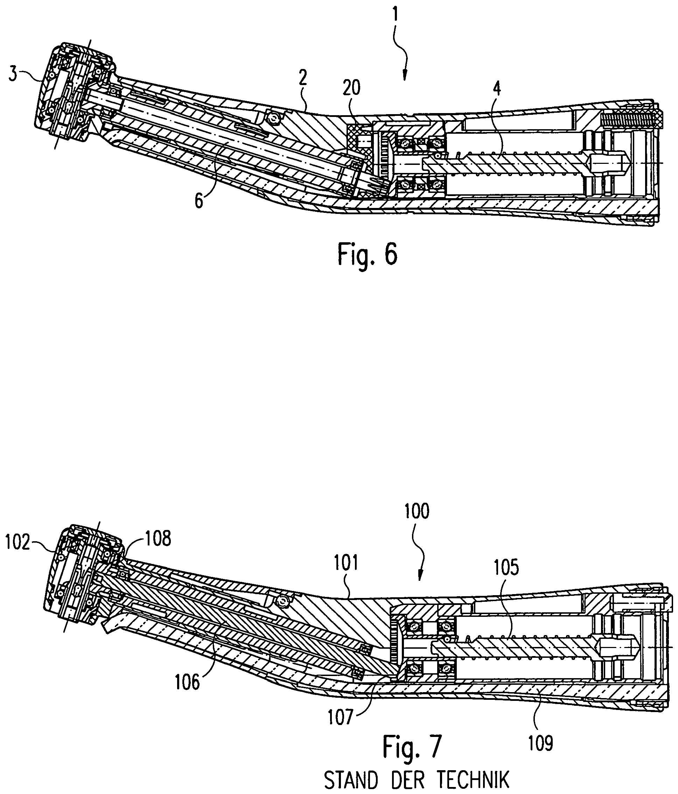

Ein derartiges zahnärztliches Handinstrument ist bereits bekannt und schematisch in Fig. 7 dargestellt. Im vorliegenden Fall ist ein sogenanntes Winkelstück 100 dargestellt, bei dem die Griffhülse 101 im mittleren Bereich leicht abgewinkelt ist. Am vorderen Ende der Griffhülse 101 ist der Kopfbereich 102 angeordnet, der zur drehbaren Aufnahme eines Behandlungswerkzeugs, beispielsweise eines zahnärztlichen Bohrers ausgebildet ist. Das Antreiben des - nicht dargestellten - Bohrers erfolgt mit Hilfe eines Antriebsstrangs, der im dargestellten Ausführungsbeispiel zwei miteinander gekoppelte Wellen 105 und 106 aufweist. Die hintere Welle 105 ist dabei an ihrem rückseitigen Ende mit einem Antrieb, beispielsweise einem Elektromotor gekoppelt und über ein Getriebe 107 am vorderen Ende mit der vorderen Welle 106 gekoppelt. Über ein weiteres Getriebe 108 am Kopfbereich 102 wird dann die Drehung der Wellen auf den Bohrer übertragen. Desweiteren erstrecken sich durch das Handstück Hohlräume und Leitungen zur Übertragung von Medien und/oder Licht. Erkennbar ist beispielsweise ein Lichtleiter 109, über den Licht auf die von dem Bohrer zu bearbeitende Behandlungsstelle gerichtet wird.

Bei einem derartigen Handstück 100 wird zwischen dem sogenannten Funktionsbereich, das ist der Bereich, in dem sich die Kraftübertragung mit den erforderlichen Elementen befindet, und den weiteren Hohlräumen unterschieden. Die weiteren Hohlräume stellen Räume dar, in denen sich die Leitungen für Medien wie Sprayluft und Wasser, die Lichtleitung und Fügespalten befinden. Es ist erforderlich, dass eine Abdichtung zwischen dem Funktionsbereich und diesen weiteren Hohlräumen vorgenommen wird.

Die oben angesprochene Abdichtung ist erforderlich, da bei einer Pflege des Handstücks 100 der Funktionsbereich mittels Überdruck von der Motoranschlussseite her gespült wird. Im Idealfall sollten das hierzu verwendete Öl sowie die Reinigungsflüssigkeit ausschließlich oben am Kopfbereich 102 austreten. Undichtigkeiten oder Verbindungen zwischen dem. Funktionsbereich und den Hohlräumen wirken sich sehr nachteilig und ungünstig auf die Handhabung des Instruments aus, da Ölaustritt an Fügespalten erfolgen könnte, der aufgrund der resultierenden verölten Oberfläche des Griffbereichs eine Handhabung des Handstücks erschwert und ferner auch ein vermehrtes Nachölen erfordert.

Insbesondere bei dem in Fig. 7 dargestellten Winkelhandstück ist diese Abdichtung aufgrund der großen Unterschiede der Verzahnungsdurchmesser im Kniebereich, in dem die beiden Wellen 105 und 106 gekoppelt sind, äußerst schwierig. Bislang wurde dieses Problem dadurch gelöst, dass an Trennstellen nach außen hin O-Ringe zur Abdichtung eingebracht wurden. Auch die Verwendung komplexer elastischer Formstücke oder ein teilweises Vergießen der Verbindungsstelle zum Abdichten wurde durchgeführt. Derartige Maßnahmen waren allerdings nicht zufriedenstellend und führten teilweise dazu, dass die Montage und Demontage des Handstücks stark behindert oder teilweise sogar unmöglich gemacht wird.

Ein vergleichbares Handstück, bei dem eine Abdichtung an den Trennstellen mittels O-Ringen erfolgt, ist ferner auch aus der US 2003/207233 A1 bekannt.

Der vorliegenden Erfindung liegt deshalb die Aufgabe zugrunde, bei einem derartigen Handstück eine neuartige Lösung zum Abdichten des Funktionsbereichs gegenüber den Hohlräumen anzugeben.

Die Aufgabe wird durch ein zahnärztliches Handstück, welches die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf dem Gedanken, unmittelbar am Kopplungsbereich der beiden Wellen des Antriebsstrangs innerhalb der Griffhülse ein zusätzliches Dichtelement anzuordnen. Dieses ist dabei derart ausgestaltet, dass unmittelbar in dem Kopplungsbereich das Austreten des Reinigungs- und Pflegemittels verhindert wird, sodass weitere Maßnahmen zu Abdichtung nicht mehr erforderlich sind. Ein weiterer Vorteil dieser Lösung besteht dabei darin, dass die Möglichkeit der Volumenreduzierung des durchströmten Funktionsraums besteht, was letztendlich den Ölbedarf des Instruments reduziert. Eine Montage und Demontage des Handinstruments wird durch dieses zusätzliche Dichtelement nicht behindert.

Erfindungsgemäß wird dementsprechend ein zahnärztliches Handinstrument mit einer länglichen Griffhülse vorgeschlagen, an deren vorderem Ende Mittel zum Halten eines Behandlungswerkzeugs, beispielsweise eines zahnärztlichen Bohrers angeordnet sind, wobei innerhalb der Griffhülse Mittel zum Antreiben des Behandlungswerkzeugs angeordnet sind, welche zumindest zwei miteinander gekoppelte, drehbar gelagerte Wellen aufweisen, und wobei erfindungsgemäß im Kopplungsbereich der beiden Wellen innerhalb der Griffhülse ein Dichtelement angeordnet, ist.

Das erfindungsgemäße Dichtelement weist einen etwa zylindrischen Außenmantel auf, der zur Aufnahme in einer entsprechenden zylindrischen Bohrung des Handstücks ausgebildet ist. Ferner weist das Dichtelement einen sich an den Außenmantel anschließenden ersten zylindrischen Ansatz auf, der im Wesentlichen parallel zu einer ersten der beiden Wellen ausgerichtet ist, sowie einen zweiten zylindrischen Ansatz, der im Wesentlichen parallel zu der zweiten der beiden Wellen ausgerichtet ist. Dabei können die beiden Wellen in einem Winkel zueinander ausgerichtet sein, das heißt, das Dichtelement ist zur Verwendung in einem Winkelstück vorgesehen. Allerdings ist die Erfindung nicht ausschließlich auf derartige Winkelstücke beschränkt sondern kann immer dann zum Einsatz kommen, wenn innerhalb eines zahnärztlichen Handinstruments eine Kopplung zweier Antriebselemente erfolgt und in diesem Bereich spezielle Maßnahmen zur Abdichtung hilfreich sind.

Das Dichtelement besteht aus einem leicht elastischen Material und kann ferner derart gestaltet sein, dass ein stellungsbezogenes bzw. definiertes Einsetzen in das dentale Instrument gewährleistet ist. Diese Maßnahmen können beispielsweise in entsprechenden Vertiefungen, Erhöhungen, Bohrungen, Senkungen, Stiften, Kugeln oder dergleichen bestehen.

Nachfolgend soll die Erfindung anhand der beiliegenden Zeichnung näher erläutert werden. Es zeigen:
- Fig. 1: den Kniebereich eines zahnärztlichen Winkelstücks, in dem ein erfindungsgemäßes Dichtelement zum Einsatz kommt;
- Fig. 2-4: Ansichten eines erfindungsgemäßen Dichtelements;
- Fig. 5: eine Schnittdarstellung des Dichtelements;
- Fig. 6: ein zahnärztliches Handinstrument mit dem erfindungsgemäßen Dichtelement in seitlicher Schnittdarstellung und
- Fig. 7: ein zahnärztliches Winkelstück gemäß dem Stand der Technik.

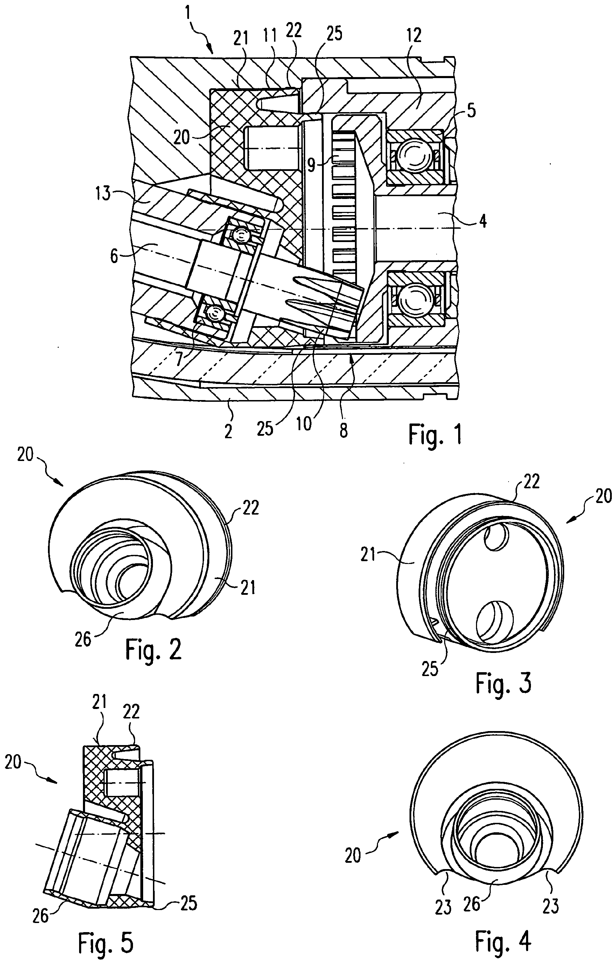

Fig. 1 zeigt in Schnittdarstellung den Kniebereich eines zahnärztlichen Winkelstücks. Dieses Winkelstück 1 entspricht im Wesentlichen dem bereits aus dem Stand der Technik bekannten und in Fig. 7 dargestellten Handstück. Es weist also eine längliche Griffhülse 2 mit einem vorderen Kopfbereich 3 auf, wobei innerhalb des Kopfbereichs 3 Mittel zur Aufnahme eines zahnärztlichen Behandlungswerkzeugs, beispielsweise eines Bohrers vorgesehen sind. Diese Mittel zur lösbaren Halterung des Bohrers sind bereits bekannt und werden dementsprechend nachfolgend nicht näher erläutert.

Eine Drehung des Bohrers wird mit Hilfe eines Antriebsstrangs erzielt, der sich durch die Griffhülse 2 erstreckt und insbesondere zwei Wellen 4 und 6 aufweist, die miteinander gekoppelt sind. Die hintere Welle 4 ist dabei mit einem Antriebsmechanismus, beispielsweise einem Elektromotor gekoppelt, die vordere Welle 6 überträgt mit Hilfe eines weiteren Getriebes die Drehung auf den Bohrer. Beide Wellen 4 und 6 sind mittels entsprechender Lager drehbar innerhalb der Griffhülse 2 angeordnet, wobei in Fig. 1 jeweils die dem Kopplungsbereich zugewandten Lager 5 und 7 dargestellt sind.

Da im vorliegenden Beispiel ein Winkelstück dargestellt ist, sind die beiden Wellen 4 und 6 nicht parallel zueinander ausgerichtet sondern in einem Winkel angeordnet. Um die Kopplung der Drehbewegung sicherzustellen, wird ein spezielles Getriebe 8 verwendet, bei dem die erste Welle 4 stirnseitig ein Zahnrad 9 mit einer Innenverzahnung aufweist. Diese Innenverzahnung 9 wirkt mit einer stirnseitigen Außenverzahnung 10 an der vorderen Welle 6 zusammen. Insofern entspricht die Ausgestaltung des Antriebsstrangs derjenigen des bekannten Handstücks gemäß Fig. 7.

Eine Besonderheit des erfindungsgemäßen Handstücks 1 besteht nunmehr darin, dass in dem Kopplungsbereich zwischen hinterer Welle 4 und vorderer Welle 6 ein spezielles Dichtelement 20 zum Einsatz kommt, dessen Ausgestaltung insbesondere den Fig. 2-5 entnommen werden kann. Dieses zusätzliche Dichtelement 20 besteht vorzugsweise aus einem leicht elastischen Material, ist vorzugsweise einstückig ausgebildet und wird in eine entsprechende Ausnehmung bzw. Bohrung 11 der Griffhülse 2 eingesetzt. Das Dichtelement 20 weist hierbei zunächst eine zylindrische Außenmantelfläche 21 auf, welche eine erste Dichtfläche darstellt und zur Anlage gegen die Innenwand der zylindrischen Bohrung 11 vorgesehen ist. Die Abdichtung wird hierbei dadurch verbessert, dass der rückseitige Endbereich der Mantelfläche 2 mit einem Dichtwulst 22 versehen ist.

Das Dichtelement 20 weist desweiteren einen ersten zylindrischen Ansatz 25 auf, der ebenfalls als weitere Dichtfläche dient und sich derart von der Mantelfläche 21 erstreckt, dass er im Wesentlichen parallel zur hinteren Welle 4 ausgerichtet ist. Dieser Ansatz 25 ist derart ausgestaltet, dass er mit dem vorderen Endbereich eines Einsatzstücks 12 zusammenwirkt, welches von der Rückseite her in die Griffhülse 2 eingeschoben wird und dazu dient, die Lager 5 für die hintere Welle 4 von der Rückseite her zu stabilisieren und das Dichtelement 20 in der Bohrung 11 zu fixieren. Das Zusammenwirken des vorderen Endbereichs dieses Einsatzstücks 12 mit dem Ansatz 25, der - entsprechend der Darstellung von Fig. 1 - geringfügig in die stirnseitige Öffnung des Einsatzstücks 12 ragt und vorzugsweise ebenfalls mit einem Dichtwulst versehen ist, stellt eine weitere Dichtfläche dar.

Schließlich erstreckt sich von der Vorderseite des Dichtelements 20 noch ein zweiter Ansatz 26, über den eine dritte Abdichtung erfolgen soll. Dieser vordere Ansatz 26 wirkt mit einer Aufnahmehülse 13 für die vordere Welle 6 zusammen und ist abgewinkelt ausgerichtet, sodass er parallel zur vorderen Welle 6 verläuft. Die Hülse 13 zur Aufnahme der Welle 6 ist dabei derart bemessen, dass sie sich in den Innenbereich dieses Ansatzes 26 erstreckt, wie dies Fig. 1 entnommen werden kann.

Das erfindungsgemäße Dichtelement besteht also vorzugsweise aus einem einstückigen Dichtkörper, durch den letztendlich die drei folgenden Dichtungsbereiche erzielt werden:
- eine erste Abdichtung erfolgt durch die Anlage der zylindrischen Mantelfläche 21 an der Innenfläche der Bohrung 11;
- eine zweite Abdichtung erfolgt durch die Anlage des hinteren zylindrischen Ansatzes 25 an der Innenfläche des axial angrenzenden Einsatzteils 12;
- die dritte Abdichtung erfolgt durch die Anlage des in einem definierten Winkel ausgerichteten Ansatzes 26 mit einem sich vorzugsweise verengenden, ringartig umlaufenden stufenartigen Absatz an der Umfangsfläche des Außenmantels der Hülse 13 zur Halterung der Welle 6.

Durch die Verwendung dieses einzelnen Dichtelements 20 kann dementsprechend insbesondere im Bereich der Kopplung der beiden Wellen eine optimale Abdichtung erzielt werden. Wie ferner ein Vergleich der Fig. 6 und 7 zeigt, hat die Verwendung dieses Dichtelements auch zur Folge, dass die Größe des verbleibenden Hohlraums in dem Kopplungsbereich reduziert wird. Diese Volumenreduzierung des durchströmten Funktionsraums hat zur Folge, dass die Erforderlichkeit des Nachölens reduziert wird.

Um eine lagerichtige Anordnung des Dichtelements 20 in der Griffhülse 2 des Handstücks 1 und damit eine optimale Dichtung sicherzustellen, können verschiedene Maßnahmen vorgesehen sein, durch welche eine Vorzugsanordnung des Dichtelements 20 definiert wird. Im vorliegenden Ausführungsbeispiel sind im unteren Bereich der zylindrischen Mantelfläche 21 zwei kreissegmentartige Ausnehmungen 23 vorgesehen, welche mit entsprechenden Vorsprüngen in der Griffhülse 2 zusammenwirken. Auf diese Weise wird sichergestellt, dass das Dichtelement 20 optimal in der Hülse 2 angeordnet und orientiert ist und dementsprechend die Dichtung in der gewünschten Weise erfolgt. Alternativ zu diesen Vertiefungen könnten auch Erhöhungen, Bohrungen, Senkungen, Stifte, Kugeln oder vergleichbare Maßnahmen verwendet werden.

Letztendlich wird durch das erfindungsgemäße Dichtelement die Abdichtung des Funktionsbereichs in einem Handstück deutlich optimiert. Ein besonderer Vorteil besteht dabei auch darin, dass das Dichtelement in einfacher Weise wieder entfernbar ist und dementsprechend eine Montage oder Demontage des Handinstruments nicht beeinträchtigt wird.

## Patentansprüche

1. Zahnärztliches Handinstrument (1) mit einer länglichen Griffhülse (2), an deren vorderem Ende Mittel zum Halten eines Behandlungswerkzeugs, beispielsweise eines zahnärztlichen Bohrers angeordnet sind,
wobei innerhalb der Griffhülse (2) Mittel zum Antreiben des Behandlungswerkzeugs angeordnet sind, welche zumindest zwei miteinander gekoppelte, drehbar gelagerte Wellen (4, 6) aufweisen,
und wobei im Kopplungsbereich der beiden Wellen (4, 6) innerhalb der Griffhülse (2) ein Dichtelement (20) angeordnet ist,
**dadurch gekennzeichnet,**
**dass** das Dichtelement (20) einen zylindrischen Außenmantel (21) aufweist, der zur Aufnahme in einer zylindrischen Bohrung (11) des Handstücks (1) ausgebildet ist, und
**dass** das Dichtelement (20)
• einen sich an den Außenmantel (21) anschließenden ersten zylindrischen Ansatz (25) aufweist, der im Wesentlichen parallel zu einer ersten der beiden Wellen (4, 6) ausgerichtet ist, sowie
• einen sich an den Außenmantel (21) anschließenden zweiten zylindrischen Ansatz (26) aufweist, der im Wesentlichen parallel zu der zweiten der beiden Wellen (4, 6) ausgerichtet ist,
wobei das Dichtelement (20) aus einem elastischen Material besteht.

2. Zahnärztliches Handinstrument nach Anspruch 1,
**dadurch gekennzeichnet,**
**dass** die beiden Wellen (4, 6) in einem Winkel zueinander ausgerichtet sind.

3. Zahnärztliches Handinstrument nach Anspruch 1 oder 2,
**dadurch gekennzeichnet,**
**dass** das Dichtelement (20) einstückig ausgebildet ist.

4. Zahnärztliches Handinstrument nach einem der vorhergehenden Ansprüche mit den im Anspruch 2 genannten Merkmalen,
**dadurch gekennzeichnet,**
**dass** das Behandlungswerkzeug ein Bohrer ist,
wobei die erste Welle eine hintere Welle (4) ist und die zweite Welle eine vordere Welle (6) ist,
wobei zur Kopplung einer Drehbewegung ein spezielles Getriebe (8) dient, bei dem die hintere Welle (4) stirnseitig ein Zahnrad (9) mit einer Innenverzahnung aufweist, die mit einer stirnseitigen Außenverzahnung (10) an der vorderen Welle (6) zusammenwirkt,
wobei die hintere Welle (4) mit einem Antriebsmechanismus gekoppelt ist und die vordere Welle (6) mit Hilfe eines weiteren Getriebes eine Drehung auf den Bohrer überträgt.

5. Zahnärztliches Handinstrument nach Anspruch 4,
**dadurch gekennzeichnet,**
**dass** es sich bei dem Antriebsmechanismus um einen Elektromotor handelt.

6. Zahnärztliches Handstück nach Anspruch 4 oder 5,
**dadurch gekennzeichnet,**
**dass** die beiden Wellen (4, 6) mittels entsprechender Lager drehbar innerhalb der Griffhülse (2) angeordnet sind.

7. Zahnärztliches Handinstrument nach einem der Ansprüche 4 bis 6,
**dadurch gekennzeichnet,**
**dass** der Außenmantel (21) eine erste Dichtfläche zur Bildung einer ersten Abdichtung darstellt und zur Anlage gegen eine Innenwand der Bohrung (11) vorgesehen ist.

8. Zahnärztliches Handinstrument nach Anspruch 7,
**dadurch gekennzeichnet,**
**dass** ein rückseitiger Endbereich des Außenmantels (21) zur Verbesserung der ersten Abdichtung mit einem Dichtwulst (22) versehen ist.

9. Zahnärztliches Handinstrument nach einem der Ansprüche 4 bis 8,
**dadurch gekennzeichnet,**
**dass** der erste zylindrische Ansatz (25) derart ausgestaltet ist, dass er mit einem vorderen Endbereich eines Einsatzstücks (12) zusammenwirkt, welches von der Rückseite her in die Griffhülse (2) eingeschoben wird und dazu dient, Lager (5) für die hintere Welle (4) von der Rückseite her zu stabilisieren und das Dichtelement (20) in der Bohrung (11) zu fixieren.

10. Zahnärztliches Handinstrument nach einem der vorhergehenden Ansprüche mit den in den Ansprüchen 9 und 7 genannten Merkmalen,
**dadurch gekennzeichnet,**
**dass** der erste zylindrische Ansatz (25) geringfügig in eine stirnseitige Öffnung des Einsatzstücks (12) ragt und ein Zusammenwirken eines vorderen Endbereichs des Einsatzstücks (12) mit dem ersten zylindrischen Ansatz (25) eine weitere Dichtfläche zur Bildung einer zweiten Abdichtung darstellt.

11. Zahnärztliches Handinstrument nach Anspruch 10 mit den im Anspruch 8 genannten Merkmalen,
**dadurch gekennzeichnet,**
**dass** der erste zylindrische Ansatz (25) ebenfalls mit einem Dichtwulst versehen ist.

12. Zahnärztliches Handinstrument nach Anspruch 11,
**dadurch gekennzeichnet,**
**dass** die Gestaltung derart ist, dass über den zweiten zylindrischen Ansatz (26) eine dritte Abdichtung erfolgt.

13. Zahnärztliches Handinstrument nach Anspruch 11,
**dadurch gekennzeichnet,**
**dass** der zweite zylindrische Ansatz (26) mit einer Aufnahmehülse (13) für die vordere Welle (6) zusammenwirkt.

14. Zahnärztliches Handinstrument nach Anspruch 13,
**dadurch gekennzeichnet,**
**dass** die Aufnahmehülse (13) derart bemessen ist, dass sie sich in einen Innenbereich des zweiten zylindrischen Ansatzes (26) erstreckt.

15. Zahnärztliches Handinstrument nach einem der vorhergehenden Ansprüche,
**dadurch gekennzeichnet,**
**dass** es sich bei dem Handinstrument um ein Winkelstück handelt.

## Claims

1. Handheld dental instrument (1) with an elongate grip sleeve (2), at a front end of which means are arranged for holding a treatment tool, for example a dental drill, wherein means for driving the treatment tool are arranged inside the grip sleeve (2), which driving means have at least two rotatably mounted shafts (4, 6) that are coupled to each other,
and wherein a sealing element (20) is arranged in the coupling region of the two shafts (4, 6) inside the grip sleeve (2),
**characterized in that**
the sealing element (20) has a cylindrical outer jacket (21), which is configured to be received in a cylindrical bore (11) of the handpiece (1), and **in that** the sealing element (20) has
• a first cylindrical extension (25), which adjoins the outer jacket (21) and which is oriented substantially parallel to a first of the two shafts (4, 6), and has
• a second cylindrical extension (26), which adjoins the outer jacket (21) and which is oriented substantially parallel to the second of the two shafts (4, 6),
wherein the sealing element (20) is made of an elastic material.

2. Handheld dental instrument according to Claim 1,
**characterized in that**
the two shafts (4, 6) are oriented at an angle to each other.

3. Handheld dental instrument according to Claim 1 or 2,
**characterized in that**
the sealing element (20) is in one piece.

4. Handheld dental instrument according to one of the preceding claims, with the features set out in Claim 2,
**characterized in that**
the treatment tool is a drill,
wherein the first shaft is a rear shaft (4) and the second shaft is a front shaft (6),
wherein a special gear (8) serves to couple a rotation movement, in which special gear (8) the rear shaft (4) has an end-face toothed wheel (9) with an inner toothing, which interacts with an end-face outer toothing (10) on the front shaft (6),
wherein the rear shaft (4) is coupled to a drive mechanism, and the front shaft (6) transmits a rotation to the drill with the aid of a further gear.

5. Handheld dental instrument according to Claim 4,
**characterized in that**
the drive mechanism is an electric motor.

6. Dental handpiece according to Claim 4 or 5,
**characterized in that**
the two shafts (4, 6) are arranged rotatably inside the grip sleeve (2) by means of corresponding bearings.

7. Handheld dental instrument according to one of Claims 4 to 6,
**characterized in that**
the outer jacket (21) constitutes a first sealing face for forming a first seal and is provided to bear against an inner wall of the bore (11).

8. Handheld dental instrument according to Claim 7,
**characterized in that**
a rear-side end region of the outer jacket (21) is provided with a sealing bead (22) for improving the first seal.

9. Handheld dental instrument according to one of Claims 4 to 8,
**characterized in that**
the first cylindrical extension (25) is configured in such a way that it interacts with a front end region of an insert piece (12), which is pushed from the direction of the rear side into the grip sleeve (2) and serves to stabilize bearings (5) for the rear shaft (4) from the direction of the rear side and to fix the sealing element (20) in the bore (11).

10. Handheld dental instrument according to one of the preceding claims, with the features set out in Claims 9 and 7,
**characterized in that**
the first cylindrical extension (25) protrudes slightly into an end-face opening of the insert piece (12), and an interaction of a front end region of the insert piece (12) with the first cylindrical extension (25) constitutes a further sealing face for forming a second seal.

11. Handheld dental instrument according to Claim 10, with the features set out in Claim 8,
**characterized in that**
the first cylindrical extension (25) is likewise provided with a sealing bead.

12. Handheld dental instrument according to Claim 11,
**characterized in that**
the configuration is such that that a third seal is obtained via the second cylindrical extension (26).

13. Handheld dental instrument according to Claim 11,
**characterized in that**
the second cylindrical extension (26) interacts with a receiving sleeve (13) for the front shaft (6).

14. Handheld dental instrument according to Claim 13,
**characterized in that**
the receiving sleeve (13) is dimensioned in such a way that it extends into an inner region of the second cylindrical extension (26).

15. Handheld dental instrument according to one of the preceding claims,
**characterized in that**
the handheld instrument is a contra-angle handpiece.

## Revendications

1. Instrument manuel (1) dentaire avec un manchon de préhension (2) allongé, au niveau de l'extrémité avant duquel des moyens servant à maintenir un outil de traitement, par exemple une fraise dentaire, sont disposés,
dans lequel sont disposés à l'intérieur du manchon de préhension (2) des moyens servant à entraîner l'outil de traitement, lesquels présentent au moins deux arbres (4, 6) couplés l'un à l'autre, montés de manière à pouvoir tourner,
et dans lequel un élément d'étanchéité (20) est disposé dans la zone de couplage des deux arbres (4, 6) à l'intérieur du manchon de préhension (2),
**caractérisé en ce**
**que** l'élément d'étanchéité (20) présente une enveloppe extérieure (21) cylindrique, qui est réalisée pour être logée dans un alésage (11) cylindrique de la pièce à main (1), et
**que** l'élément d'étanchéité (20)
- présente un premier épaulement (25) cylindrique se raccordant à l'enveloppe extérieure (21), qui est orienté sensiblement de manière parallèle par rapport à un premier des deux arbres (4, 6), et
- présente un deuxième épaulement (26) cylindrique se raccordant à l'enveloppe extérieure (21), qui est orienté sensiblement de manière parallèle par rapport au second des deux arbres (4, 6),
dans lequel l'élément d'étanchéité (20) est constitué d'un matériau élastique.

2. Instrument manuel dentaire selon la revendication 1,
**caractérisé en ce**
**que** les deux arbres (4, 6) sont orientés selon un angle l'un par rapport à l'autre.

3. Instrument manuel dentaire selon la revendication 1 ou 2,
**caractérisé en ce**
**que** l'élément d'étanchéité (20) est réalisé d'un seul tenant.

4. Instrument manuel dentaire selon l'une quelconque des revendications précédentes avec les caractéristiques évoquées dans la revendication 2,
**caractérisé en ce**
**que** l'outil de traitement est une fraise,
dans lequel le premier arbre est un arbre arrière (4) et le second arbre est un arbre avant (6),
dans lequel un engrenage (8) spécifique sert au couplage d'un déplacement de rotation, où l'arbre arrière (4) présente côté frontal une roue dentée (9) avec une denture intérieure, qui coopère avec une denture extérieure (10) côté frontal au niveau de l'arbre avant (6),
dans lequel l'arbre arrière (4) est couplé à un mécanisme d'entraînement et l'arbre avant (6) transmet à l'aide d'un autre engrenage une rotation sur la fraise.

5. Instrument manuel dentaire selon la revendication 4,
**caractérisé en ce**
**que** le mécanisme d'entraînement est un moteur électrique.

6. Pièce à main dentaire selon la revendication 4 ou 5,
**caractérisée en ce**
**que** les deux arbres (4, 6) sont disposés à l'intérieur du manchon de préhension (2) de manière à pouvoir tourner au moyen de paliers correspondants.

7. Instrument manuel dentaire selon l'une quelconque des revendications 4 à 6,
**caractérisé en ce**
**que** l'enveloppe extérieure (21) constitue une première face étanche servant à former une première étanchéification et est prévue pour venir en appui contre une paroi intérieure de l'alésage (11).

8. Instrument manuel dentaire selon la revendication 7,
**caractérisé en ce**
**qu'**une zone d'extrémité côté arrière de l'enveloppe extérieure (21) est prévue pour améliorer la première étanchéification avec un bourrelet étanche (22).

9. Instrument manuel dentaire selon l'une quelconque des revendications 4 à 8,
**caractérisé en ce**
**que** le premier épaulement (25) cylindrique est configuré de telle manière qu'il coopère avec une zone d'extrémité avant d'une pièce d'insertion (12), laquelle est introduite par glissement depuis le côté arrière dans le manchon de préhension (2) et sert à stabiliser des paliers (5) pour l'arbre arrière (4) depuis le côté arrière et à bloquer l'élément étanche (20) dans l'alésage (11).

10. Instrument à main dentaire selon l'une quelconque des revendications précédentes avec les caractéristiques évoquées dans les revendications 9 et 7,
**caractérisé en ce**
**que** le premier épaulement (25) cylindrique dépasse légèrement dans une ouverture côté frontal de la pièce d'insertion (12) et une coopération d'une zone d'extrémité avant de la pièce d'insertion (12) avec le premier épaulement (25) cylindrique constitue une autre face étanche servant à former une deuxième étanchéification.

11. Instrument manuel dentaire selon la revendication 10 avec les caractéristiques mentionnées dans la revendication 8,
**caractérisé en ce**
**que** le premier épaulement (25) cylindrique est pourvu également d'un bourrelet étanche.

12. Instrument manuel dentaire selon la revendication 11,
**caractérisé en ce**
**que** la configuration est telle qu'une troisième étanchéification est effectuée par l'intermédiaire du deuxième épaulement (26) cylindrique.

13. Instrument manuel dentaire selon la revendication 11,
**caractérisé en ce**
**que** le deuxième épaulement (26) cylindrique coopère avec un manchon de logement (13) pour l'arbre avant (6).

14. Instrument manuel dentaire selon la revendication 13,
**caractérisé en ce**
**que** le manchon de logement (13) est dimensionné de telle manière qu'il s'étend dans une zone intérieure du deuxième épaulement (26) cylindrique.

15. Instrument manuel dentaire selon l'une quelconque des revendications précédentes,
**caractérisé en ce**
**que** l'instrument manuel est une pièce d'angle.
